# EUROPÄISCHE PATENTANMELDUNG

(11) **EP 2 239 218 A2**
(43) Veröffentlichungstag der Anmeldung: **13.10.2010**
(21) Anmeldenummer: 10003176.4
(22) Anmeldetag: 25.03.2010
(51) Int. Cl.: B65H 23/04

(54) **Vorrichtung zur Messung der Zugkraft bzw. Zugspannung einer laufenden Materialbahn**

(30) Priorität: 07.04.2009 DE 202009005311 U; 24.04.2009 DE 202009005953 U
(71) Anmelder: Knäbel, Horst, Dipl.-Ing., D-40667 Meerbusch (DE)
(72) Erfinder: Knäbel, Horst, Dipl.-Ing., D-40667 Meerbusch (DE)
(74) Vertreter: Kossobutzki, Walter

(57) **Zusammenfassung**

Die Erfindung bezieht sich auf eine Vorrichtung zur Messung der Zugkraft bzw. Zugspannung einer laufenden Materialbahn, bestehend aus einer von der Materialbahn über einen Winkel von etwa 20 bis 180° umschlungenen Rolle oder Walze, die an mindestens einem Ende über jeweils eine aus einem Lager und ein Lagergehäuse bestehende Lagerung geführt ist und aus einer der Lagerung zugeordneten Messeinrichtung.

Um die Vorrichtung bei einfachem und kostengünstigem Aufbau unabhängig von der Lage und dem Bereich der Umschlingung einfach einbauen und einrichten zu können, bei schweren Rollen oder Walzen geringe Zugkräfte bzw. Zugspannungen der Materialbahn genau messen zu können und darüber hinaus die auf sie wirkenden, eventuell auch stark schwankenden oder sich dynamisch ändernden Kräfte in Größe und/oder Wirkrichtung genau bestimmen zu können, besteht die Messeinrichtung aus einem kragarmartig und freitragend das Lager (2) aufnehmenden und mit einem Biegeelement (1c) verbundenen Lagerzapfen (1b) sowie einem dessen Auslenkung erfassenden, aus mindestens vier zueinander versetzten Messeinheiten (8) gebildeten Induktionsmesssystem (7) und aus einer von dem Lagergehäuse (5) gehaltenen und die Auslenkung des Lagerzapfens (1b) begrenzenden Lagerhülse (4).

## Beschreibung

Die Erfindung bezieht sich auf eine Vorrichtung zur Messung der Zugkraft bzw. Zugspannung einer laufenden Materialbahn, bestehend aus einer von der Materialbahn über einen Winkel von etwa 20 bis 180° umschlungenen Rolle oder Walze, die an mindestens einem Ende über jeweils eine aus einem Lager und ein Lagergehäuse bestehende Lagerung geführt ist und aus einer der Lagerung zugeordneten Messeinrichtung.

Während der Bearbeitung oder Behandlung von Materialbahnen aus Textilien, Papieren, Kunststoffen, Metallen in Form von Folien sowie von Drähten, Kabeln, Seilen oder dergleichen ist es zur Qualitätssicherung und zur Steuerung der Anlagen unbedingt erforderlich, dass die Materialbahn mit einer genau vorgegebenen Zugspannung über die Rollen bzw. Walzen transportiert wird, damit nicht nur eine optimale Bearbeitung oder Behandlung der Materialbahn erreicht wird, sondern auch eine störungsfreie Auf- oder Abwicklung derselben möglich ist. Um dies sicher zu stellen, wird die Zugkraft bzw. Zugspannung der Materialbahn ständig gemessen und gegebenenfalls nachreguliert. Dabei wird die Tatsache ausgenutzt, dass eine über einen vorgegebenen Winkel eine Rolle oder Walze umschlingende Materialbahn eine radiale Kraft auf die Lager der Rollen oder Walzen ausübt, die gemessen und unter Berücksichtigung des Umschlingungswinkels ermittelt werden kann.

Für eine solche Messung der Zugkraft bzw. Zugspannung einer Materialbahn wird eine Messeinrichtung verwendet, die an mindestens einer Lagerung einer Rolle oder Walze angebracht wird, wobei die Rolle oder Walze immer um etwa 20° bis 180° von der Materialbahn umschlungen wird, da nur dann die für die Messung der Zugkraft bzw. Zugspannung benötigten Kräfte auftreten und messbar sind.

Eine solche Messeinrichtung ist in den Lagerstellen integriert und besteht vorwiegend aus Dehnungsmessstreifen, die zu einer Messbrücke zusammengefasst und meist als Wheatstone'sche Vollmessbrücke geschaltet sind. Mit diesen Messeinrichtungen wird die Kraft nur in einer vorgegebenen Bezugsebene erfasst, die dann über die Messbrücke als Signal zur Kontrolle und/oder zur Steuerung der Anlage zur Verfügung steht. Dies bedeutet, dass die Messeinrichtung so eingebaut und ausgerichtet werden muss, dass die konstruktiv vorgegebene Bezugsebene genau in der Winkelhalbierenden des Umschlingungswinkels verläuft.

Aufgrund dieser zu beachtenden Einbaulage und der in die Berechnung einzubeziehenden Parameter zur Ermittlung der Zugkraft bzw. Zugspannung der Materialbahn handelt es sich bei diesen Messeinrichtungen um ein eindimensionales und mit erheblichen Messunsicherheiten behaftetes Messverfahren, da jegliche Änderungen der geometrischen Verhältnisse und anderer Einflussfaktoren unberücksichtigt bleiben. Darüber hinaus bieten die bekannten Messeinrichtungen keinerlei Informationen über die Ursache bei einer Änderung der Messwerte.

Der Erfindung liegt deshalb die Aufgabe zugrunde, eine Vorrichtung zur Messung der Zugkraft bzw. Zugspannung einer laufenden Materialbahn zu schaffen, die einen einfachen und kostengünstigen Aufbau besitzt, unabhängig von der Lage und dem Bereich der Umschlingung eingebaut werden kann, einfach einzurichten und auch bei schweren Rollen oder Walzen in der Lage ist, geringe Zugkräfte bzw. Zugspannungen der Materialbahn genau zu messen und die darüber hinaus die Möglichkeit bietet, die auf sie wirkenden, eventuell auch stark schwankenden oder sich dynamisch ändernden Kräfte in Größe und/oder Wirkrichtung genau zu bestimmen, um die tatsächliche, jeweils aktuelle Zugkraft bzw. Zugspannung der Materialbahn zu ermitteln, darzustellen und an die Steuerung der Anlage zu signalisieren und damit dem Anwender die erforderlichen und verfahrenstechnisch relevanten Informationen für einen optimalen Betrieb der Anlage zu geben.

Zur Lösung dieser Aufgabe wird gemäß der Erfindung bei einer Vorrichtung der eingangs beschriebenen Gattung vorgeschlagen, dass die Messeinrichtung aus einem kragarmartig und freitragend das Lager aufnehmenden und mit einem Biegeelement verbundener Lagerzapfen sowie einem dessen Auslenkung erfassenden, aus mindestens vier zueinander versetzten Messeinheiten gebildeten Induktionsmesssystem und aus einer von dem Lagergehäuse gehaltenen und die Auslenkung des Lagerzapfens begrenzenden Lagerhülse besteht.

Eine derartige Vorrichtung kann unabhängig vom Verlauf der Materialbahn eingebaut werden, da die Belastung der Lager durch die Materialbahn, aus der die Zugkraft bzw. Zugspannung ermittelt wird, über ein zweiachsiges Messsystem, das die Auslenkung des unter Last radial ausweichenden Biegeelementes in alle Richtungen erfasst, ausgewertet werden kann. Aus den rechtwinklig zueinander stehenden Kraftkomponenten wird eine Resultierende gebildet, deren Größe und Richtung zur Bestimmung und Auswertung der Bahnzugkraft bzw. Bahnzugspannung einsetzbar ist. Demzufolge ist es auch möglich, den Bereich der nominal zu erwartenden Materialbahnumschlingung durch das Anlegen eines den Materialbahnverlauf simulierenden Hilfsmittels messtechnisch zu erfassen und zu speichern. Durch die vom Verlauf der Materialbahn unabhängige Einbaulage ist es bei dieser Vorrichtung auch möglich, das Gewicht der Walze durch die Zuordnung eines geeigneten Gegengewichtes so weit zu kompensieren, dass der zu wählende Messbereich nicht nach der Gewichtslast der Walze oder Rolle, sondern nach der zu erwartenden Zugkraft der Materialbahn bestimmt werden kann. Die so in einfacher und sicherer Weise ermittelte Zugkraft bzw. Zugspannung kann beliebig dargestellt und als Signal an die Steuerung der Anlage übertragen werden und bietet so dem Anwender die erforderlichen und verfahrenstechnischen Informationen für einen optimalen Betrieb der Anlage.

Weitere Merkmale einer Vorrichtung gemäß der Erfindung sind in den Ansprüchen 2 bis 10 offenbart.

Die Erfindung sowie weitere Vorteile derselben werden nachfolgend anhand in einer Zeichnung dargestellter Ausführungsbeispiele näher erläutert. Dabei zeigen
- Figur 1: eine geschnittene Aufrissdarstellung einer Vorrichtung gemäß der Erfindung,
- Figur 2: einen Schnitt durch die Vorrichtung der Figur 1 im Bereich des Induktionsmesssystems,
- Figur 3: ein Längsschnitt durch eine andere Ausführung einer Vorrichtung gemäß der Erfindung und

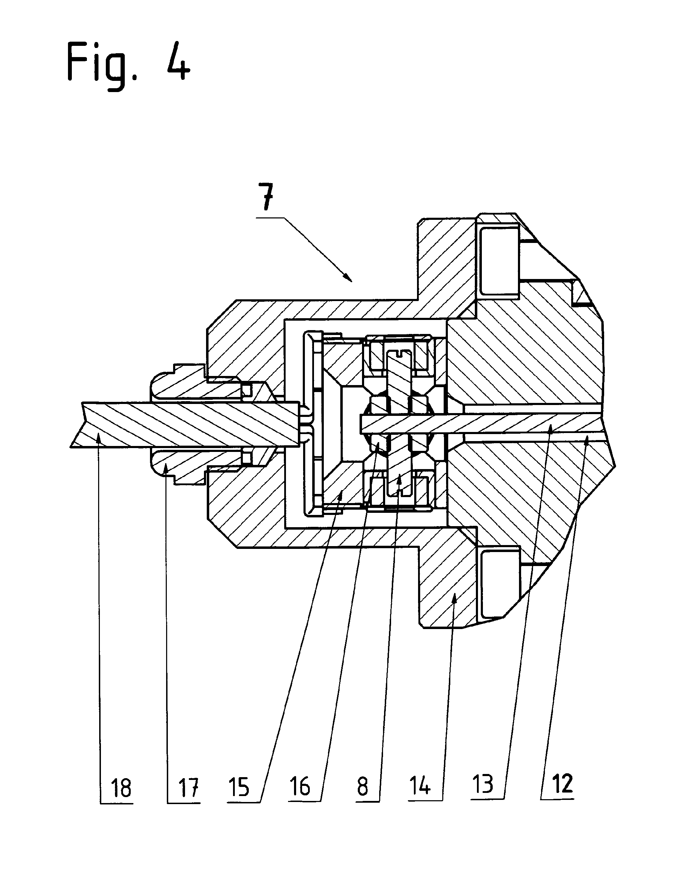

- Figur 4: eine vergrößerte Darstellung des in der Figur 3 gezeigten Induktionsmesssystems.

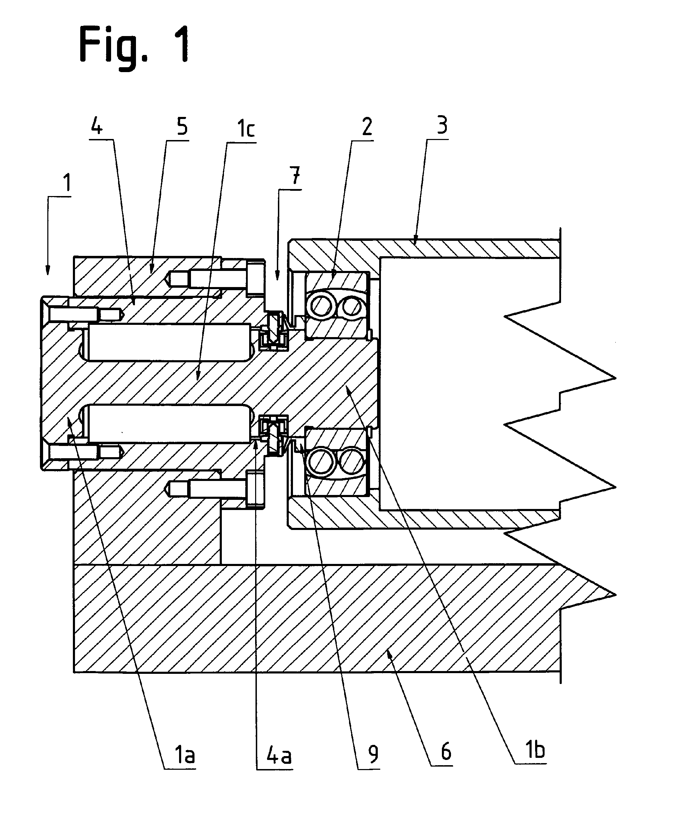

In der Figur 1 der Zeichnung ist nur die Lagerung eines Endes einer beispielsweise walzenartig ausgebildeten Rolle 3 im Schnitt zu sehen, in der eine Vorrichtung zur Messung der Zugkraft bzw. der Zugspannung einer laufenden, allerdings nicht eingezeichneten Materialbahn eingesetzt ist. Diese Vorrichtung besteht zunächst aus einem Lagerbock 5, der von einem nur angedeuteten Maschinengestell 6 getragen wird. In diesen Lagerbock 5 ist von der der Rolle 3 zugewandten Seite eine Lagerhülse 4 eingesetzt, die hier über einen Flansch an dem Lagerbock 5 angeschraubt ist. Diese Lagerhülse 4 nimmt von der anderen, also von der der Rolle 3 abge wandten Seite aus, ein Achslager 1 auf, welches, in der Zeichnung von links nach rechts gesehen, aus einem Flansch 1a, einem Biegeelement 1c und einem Lagerzapfen 1b besteht. Über den Flansch 1a ist das Achslager 1 an der Außenseite der Lagerhülse 4 mittels Schrauben befestigt. Das Biegeelement 1c ist hier als Stabfeder mit kreisförmigen Querschnitt ausgebildet und weist über den größten Teil seiner innerhalb der Lagerhülse 4 befindlichen Länge einen beliebig vorwählbaren, reduzierten Querschnitt auf. Der in seinem Querschnitt größere Lagerzapfen 1b nimmt ein Wälzlager 2 auf, welches in die Rolle 3 eingesetzt ist.

In dem dem Wälzlager 2 zugewandten Teil der Lagerhülse 4 befindet sich in einem etwas größeren Querschnittsbereich des Biegelementes 1c ein zweiachsiges Induktionsmesssystem 7, welches in diesem Ausführungsbeispiel aus vier jeweils unter einem Winkel von 90° gegeneinander versetzten Messeinheiten 8 gebildet ist. Jeweils zwei sich gegenüberliegende Messeinheiten 8 bilden einen sogenannten Messtaster. Jede Messeinheit 8 besteht aus einem Abschirmkörper 8a, der von jeweils einer Aussparung aufgenommen wird. In die Abschirmkörper 8a ist jeweils eine Spule 8b eingesetzt. Die Abschirmkörper 8a werden von nicht magnetischen Scheiben oder Hülsen 8c getragen. In die Spulen 8b ragen Ansätze 8e von Spulenkernen 8d, die ihrerseits über Feingewinde in einen umlaufenden und dem Wälzlager 2 zugewandten Vorsprung der Lagerhülse 4 fluchtend zu den Spulen 8b eingeschraubt sind. An diesem Vorsprung der Lagerhülse 4 liegt ein Wellendichtring 9 an, der das Induktionsmesssystem 7 gegen das Eindringen von Schmutz schützt, ohne dass seine Reibung an der Lagerhülse 4 das Messergebnis auch nur im geringsten beeinflussen kann.

Ferner besitzt die Lagerhülse 4 in vorteilhafter Weise eine im inneren Querschnitt reduzierte Ringfläche 4a, an der sich das Biegeelement 1c bei Überschreitung einer vorwählbaren, zulässigen Durchbiegung, die beispielsweise 20 µm bis 250 µm beträgt, abstützen kann.

Zur Messung der Kraftkomponenten mit den rechtwinklig zueinander angeordneten Messeinheiten 8 werden die sich gegenüberliegenden Spulen 8b zu je einer Halbbrücke zusammengeschaltet und ihre Widerstandsänderung in bekannter Weise ausgewertet. Aus den Kraftkomponenten lässt sich dann eine Resultierende nach Größe und Richtung bestimmen.

Das Induktionsmesssystem 7 ist so ausgelegt, dass die Ringspaltbreite zwischen dem Innendurchmesser der Spulen 8b und dem Außendurchmesser der in die Spulen 8b eintauchenden Ansätze 8e des Spulenkernes 8d größer ist als die vorwählbare, zulässige Durchbiegung des Biegeelementes 1c. Dadurch erfolgt die Messung absolut berührungslos und verschleißfrei.

Durch die einfache, modulbezogene Bauweise der Vorrichtung ist es möglich, beliebig ausgelegte und beliebig dimensionierte Rollen 3 mit derartigen Lagerhülsen 4 auszurüsten, um so beispielsweise auch bereits vorhandene und in Betrieb befindliche Rollen mit der erfindungsgemäßen Vorrichtung auszustatten oder entsprechende Messrollen problemlos aufzubauen.

Falls das Gewicht der Rolle 3 im Verhältnis zur Bahnzugkraft sehr hoch ist, kann es bei einer solchen, vom Umschlingungswinkel der Materialbahn unabhängig einbaubaren Vorrichtung vorteilhaft sein, das Gewicht der Rolle durch ein Gegengewicht teilweise oder vollkommen auszugleichen, welches am Biegeelement 1c angelenkt oder angebunden werden kann. Das Gegengewicht kann auch als gewichtsbelasteter Hebel ausgeführt sein.

Die Kalibrierung der erfindungsgemäßen Vorrichtung erfolgt im unbelasteten Zustand, also im Stillstand der Anlage ohne Zugkraft bzw. Zugspannung auf die Materialbahn. Dazu wird einerseits das Gewicht bzw. ein noch verbleibender Gewichtsanteil der Rolle 3 kompensiert, indem der in vertikaler Richtung weisende Messwert elektrisch auf Null gesetzt wird andererseits ein Lineal oder dergleichen tangential auf die Rolle und auf eine vor- oder nachgelagerte Rolle 3 aufgelegt wird, wobei eine geringe, nicht definierte Kraft ausreichend ist, um den Bereich der Umschlingung der Materialbahn festzustellen und abzuspeichern.

Ein mit diesen Werten gespeister Rechner kann dann bei laufender Materialbahn daraus die jeweils aktuelle Zugkraft bzw. Zugspannung ermitteln. Parallel dazu kann die resultierende Kraft vorzugsweise in einem polaren Diagramm in Größe und Wirkrichtung sowie ihrer Stellung innerhalb des eingeprägten Umschlingungswinkels dargestellt werden. Damit bietet die erfindungsgemäße Vorrichtung auch die Möglichkeit, Änderungen und Beeinflussungen des Bahnverlaufes, zum Beispiel bei Haftung durch Adhäsion der Materialbahn auf der Rolle oder durch Abheben beim Entstehen eines Luftpolsters sowie auch die Änderung der Lagerreibung zu erkennen und beim Einsatz einer entsprechenden Softwareeindeutig zu interpretieren und darzustellen. Ferner ist es mit der erfindungsgemäßen Vorrichtung möglich, den Verlauf der Materialbahn beim Auf- oder Abwickeln auf eine vorgeschaltete Walze durch die sich daraus ergebende Neigung der Resultierenden innerhalb des eingeprägten Umschlingungswinkels zu kontrollieren bzw. zu messen. Beispielsweise beim Einsatz einer derartigen Vorrichtung in einer Förderanlage lässt sich auch die Belastung bzw. Belegung des Bandes kontrollieren.

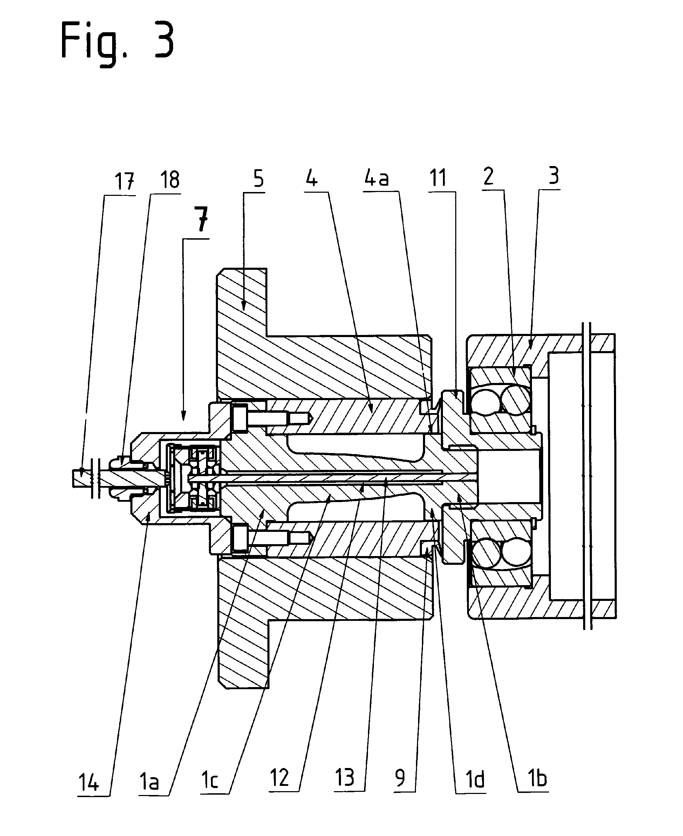

Bei dem Ausführungsbeispiel der Figur 3 ist das Lager 2 nicht direkt, sondern über einen Adapter 11 mit dem Lagerzapfen 1b verbunden. Dabei weist der Lagerzapfen 1b ein Aussengewinde auf, auf dem der Adapter 11 aufschraubbar ist. Zwischen dem Flansch 1a und einem weiteren Flansch 1d ist der Querschnitt des Biegeelementes 1c reduziert, um eine für die messtechnische Erfassung optima-1e Durchbiegung zu erzielen.

Die Veränderung bzw. Reduzierung dieses Querschnittes wird in vorteilhafter Weise so gewählt, dass die auftretende Biegespannung in allen Querschnittsbereichen des Biegeelementes 1c gleich bzw. nahezu gleich groß ist. Dadurch besteht die Möglichkeit mit verhältnismäßig geringen Biegspannungen eine relativ große Auslenkung zu erzielen, die weit unterhalb der Proportionalitätsgrenze des Werkstoffes des Biegeelementes 1c liegt.

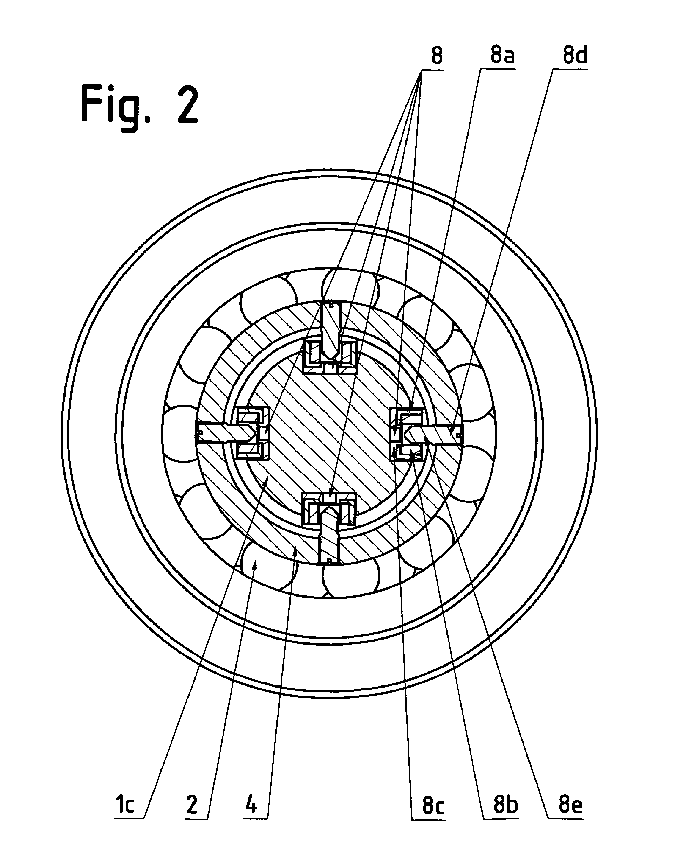

Ferner ist das Achslager 1 mit einer durchgehenden, jedoch abgesetzten Bohrung 12 versehen, durch den ein stabförmiger Körper 13 ragt, der ausschließlich im Bereich des Lagerzapfens 1b mit dem Achslager 1 verbunden ist. Die Verbindung kann durch Klemmung, Klebung, Lötung oder Schweißung erfolgen. Im übrigen Bereich ist der stabförmige Körper 13 frei bewegbar. Der stabförmige Körper 13 ist in diesem Ausführungsbeispiel so lang ausgebildet, dass er um ein vorgegebenes Maß aus dem Flansch 1a heraus und in das an der äußeren Stirnfläche des Flansches 1a befestigte Induktionsmesssystem 7 hineinragt. Dies ist hier in ähnlicher Weise wie das Induktionssystem der Figuren 1 und 2 ausgebildet und besteht ebenfalls aus vier jeweils um 90° gegeneinander versetzten Messeinheiten 8, von denen jeweils zwei sich gegenüberliegende Messeinheiten 8 einen Messtaster bilden, jedoch sind hierbei die Spulen 8b in einen justierbaren Anschlussblock 15 eingebaut, der mit dem feststehenden Flansch 1a verbunden ist, während dessen die Spulenkerne 8d in einen Ring 16 eingeschraubt sind, den sie durch Klemmung auf den stabförmigen Körper 13 genau positioniert und fixiert halten. Von dem auf dem Anschlussblock 15 installierten und von einer Schutzkappe 14 umschlossenen Induktionsmesssystem 7 ist ein Anschlusskabel 17 durch eine Verschraubung 18 nach außen geführt.

Der stabförmige Körper 13 überträgt hier die kraftproportionale Auslenkung des Lagerzapfens 1b auf das Induktionsmesssystem 7. Bei diesem Ausführungsbeispiel dient die Lagerhülse 4 nur noch zur Halterung und Aufnahme des Achslagers 1 im Lagerbock 5 sowie zum Schutz gegen Überlastung des Biegeelementes 1c.

## Patentansprüche

1. Vorrichtung zur Messung der Zugkraft bzw. Zugspannung einer laufenden Materialbahn, bestehend aus einer von der Materialbahn über einen Winkel von etwa 20 bis 180° umschlungenen Rolle oder Walze, die an mindestens einem Ende über jeweils eine aus einem Lager und ein Lagergehäuse bestehende Lagerung geführt ist und aus einer der Lagerung zugeordneten Messeinrichtung, **dadurch gekennzeichnet,**
**dass** die Messeinrichtung aus einem kragarmartig und freitragend das Lager (2) aufnehmenden und mit einem Biegeelement (1c) verbundener Lagerzapfen (1b) sowie einem dessen Auslenkung erfassenden, aus mindestens vier zueinander versetzten Messeinheiten (8) gebildeten Induktionsmesssystem (7) und aus einer von dem Lagergehäuse (5) gehaltenen und die Auslenkung des Lagerzapfens (1b) begrenzenden Lagerhülse (4) besteht.

2. Vorrichtung nach Anspruch 1,
**dadurch gekennzeichnet,**
**dass** das Biegeelement (1c) als Stabfeder mit kreisförmigem Querschnitt ausgebildet ist.

3. Vorrichtung nach Anspruch 1 oder 2,
**dadurch gekennzeichnet,**
**dass** das Induktionsmesssystem (7) aus vier jeweils um 90° gegeneinander versetzten und mit dem Lagerzapfen (1d) verbindbaren Messeinheiten (8) gebildet ist.

4. Vorrichtung nach mindestens einem der Ansprüche 1 bis 3,
**dadurch gekennzeichnet,**
**dass** dem Lagerzapfen (1b) eine Anschlagfläche (4a) als Biegebegrenzung zugeordnet ist.

5. Vorrichtung nach mindestens einem der Ansprüche 1 bis 4,
**dadurch gekennzeichnet,**
**dass** dem Achslager (1) ein stabförmiger, die Auslenkung des Lagerzapfens (1b) an das Induktionsmesssystem (7) übertragender Körper (13) zugeordnet ist.

6. Vorrichtung nach mindestens einem der Ansprüche 1 bis 5,
**dadurch gekennzeichnet,**
**dass** der stabförmige Körper (13) durch eine Bohrung (12) des Achslagers (1) ragt, der nahe des Lagers (2) befestigt ist.

7. Vorrichtung nach mindestens einem der Ansprüche 1 bis 6,
**dadurch gekennzeichnet,**
**dass** dem freien Ende des stabförmigen Körpers (13) ein mit Spulenkernen (8d) bestückter Ring (16) zugeordnet ist, der hilfsweise über die Spulenkerne (8d) mit dem stabförmigen Körper (13) über eine Klemmung verbindbar ist.

8. Vorrichtung nach mindestens einem der Ansprüche 1 bis 7,
**dadurch gekennzeichnet,**
**dass** das Biegeelement (1c) längs seiner Achse unterschiedliche Querschnitte aufweist.

9. Vorrichtung nach mindestens einem der Ansprüche 1 bis 9,
**dadurch gekennzeichnet,**
**dass** der Querschnittsverlauf des Biegeelementes (1c) so ausgelegt ist, dass der Spannungsverlauf zwischen den beiden Flanschen (1a und 1d) nahezu konstant ist.

10. Vorrichtung nach mindestens einem der Ansprüche 1 bis 9,
**dadurch gekennzeichnet,**
**dass** der Lagerzapfen (1b) des Achslagers (1) als Gewindeansatz zur Aufnahme eines, das Lager (2) tragenden Adapters (11) ausgeführt ist.
